Europäisches Patentamt

European Patent Office

Office européen des brevets

(11) Veröffentlichungsnummer : **0 463 493 B1**

# (12) EUROPÄISCHE PATENTSCHRIFT

(45) Veröffentlichungstag der Patentschrift :
**09.02.94 Patentblatt 94/06**

(51) Int. Cl.$^5$ : **C08G 18/22, C08G 18/08**

(21) Anmeldenummer : **91109715.2**

(22) Anmeldetag : **13.06.91**

(54) **Verfahren zur Herstellung von Urethan- und überwiegend Isocyanuratgruppen aufweisenden Hartschaumstoffen und deren Verwendung als Dämmaterialien.**

(30) Priorität : **26.06.90 DE 4020255**

(43) Veröffentlichungstag der Anmeldung :
**02.01.92 Patentblatt 92/01**

(45) Bekanntmachung des Hinweises auf die
Patenterteilung :
**09.02.94 Patentblatt 94/06**

(84) Benannte Vertragsstaaten :
**AT BE CH DE ES FR GB IT LI NL SE**

(56) Entgegenhaltungen :
**FR-A- 1 224 159**
**FR-A- 1 511 865**
**US-A- 4 393 015**

(73) Patentinhaber : **BAYER AG**
**D-51368 Leverkusen (DE)**

(72) Erfinder : **Heilig, Gerhard, Dr.**
**Drosselweg 40**
**W-5060 Bergisch Gladbach 2 (DE)**
Erfinder : **Wiedermann, Rolf, Dr.**
**Wiesenstrasse 18**
**W-5068 Odenthal-Voiswinkel (DE)**
Erfinder : **Schmitz, Wolfgang**
**Im Kerberich 27C**
**W-5068 Odenthal-Blecher (DE)**

## Beschreibung

Urethan- und überwiegend Isocyanuratgruppen aufweisende Hartschaumstoffe, im folgenden kurz PIR-Schaumstoffe genannt, sind lange bekannt. Üblicherweise werden bei ihrer Herstellung Trichlorfluormethan oder andere halogenierte Kohlenwasserstoffe als Blähmittel verwendet. Üblich ist auch die Verwendung von Alkalicarboxylaten als Katalysatoren, welche in der Regel in Polyolen mit hoher OH-Zahl gelöst werden (z.B. US-A-4 393 015).

FR-A-1 224 159 betrifft ein Verfahren zur Herstellung von Weichschaum auf Basis von Polyethern und Polyisocyanat in Gegenwart einer wässrigen alkalischen Lösung eines Alkali-Fettsäuresalzes als Katalysator.

Kommen größere Mengen dieser Katalysatoren bei der Schaumstoffherstellung zum Einsatz, verschiebt sich die Kennzahl derart, daß das Eigenschaftsniveau der Schaumstoffe beeinträchtigt wird. Insbesondere wird dadurch die Dimensionsstabilität der Produkte wesentlich verschlechtert.

Es wurde nun gefunden, daß man hochvernetzte, dimensionsstabile und zähe PIR-Schaumstoffe dann herstellen kann, wenn man Wasser als Lösemittel für die Katalysatorsalze verwendet. Dieses hat zudem den Vorteil, daß halogenierte Kohlenwasserstoffe als Blähmittel, wie Trichlorfluormethan, eingespart oder ganz überflüssig gemacht werden können, da Wasser neben seiner Funktion als Lösemittel durch die Reaktion mit Isocyanatgruppen Kohlendioxid freisetzt, welches als Blähmittel dient.

Als weiterer Vorteil wurde gefunden, daß gegenüber den nach herkömmlichen Verfahren hergestellten PIR-Schaumstoffen die erfindungsmäßig hergestellten PIR-Schaumstoffe in der Verarbeitung nach der Doppeltransportbandtechnik als Plattenware nur sehr geringe Unterschiede zwischen freier und Gesamtrohdichte aufweisen.

Gegenstand der Erfindung ist ein Verfahren zur Herstellung von Urethan- und überwiegend Isocyanuratgruppen aufweisenden Hartschaumstoffen durch Umsetzung von

a) Polyisocyanaten mit

b) Verbindungen mit mindestens zwei gegenüber Isocyanaten aktiven Wasserstoffatomen vom Molekulargewicht 400 bis 10.000 und gegebenenfalls

c) Kettenverlängerungs- und Vernetzungsmitteln mit mindestens zwei gegenüber Isocyanaten aktiven Wasserstoffatomen vom Molekulargewicht 32 bis 399 in Gegenwart von

d) Wasser als Treibmittel und

e) Trimerisierungs-Katalysatoren, gegebenenfalls in Gegenwart von

f) anderen Treibmitteln und weiteren an sich bekannten Hilfs- und Zusatzmitteln,

bei einer Kennzahl von über 150, vorzugsweise 170 bis 300, dadurch gekennzeichnet, daß als Treibmittel und Trimerisierungskatalysator eine wäßrige Lösung von Alkalicarboxylaten, vorzugsweise -acetaten, bevorzugt Kaliumacetat, mit einem Alkalicarboxylatgehalt von 10 bis 50 Gew.-% verwendet wird, wobei mindestens 1,0 Gew.-% Wasser, bezogen auf des Polyisocyanat, eingesetzt werden.

Erfindungsgemäß ist bevorzugt, daß

- der Alkalicarboxylatgehalt der wäßrigen Lösung 20 bis 40 Gew.-% beträgt,
- die Schaumstoffe unter Verwendung von mindestens 1,4 Gew.-% Wasser, bezogen auf das Polyisocyanat, hergestellt werden,
- und insbesondere, daß man
- die Schaumstoffe unter Mitverwendung halogenfreier Flammschutzmittel herstellt.

Zur Herstellung der Urethan- und überwiegend Isocyanuratgruppen aufweisenden Hartschaumstoffe werden erfindungsgemäß als Ausgangskomponenten verwendet:

a) Aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

$$Q(NCO)_n$$

in der

n = 2 bis 4, vorzugsweise 2, und

Q einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen, oder einen araliphatischen Kohlenwasserstoffrest mit 8 bis 15, vorzugsweise 8 bis 13 C-Atomen, bedeuten, z.B. solche Polyisocyanate, wie sie in der DE-OS 28 32 253, Seiten 10 bis 11, beschrieben werden.

Besonders bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenyl-polymethylen-polyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocya-

EP 0 463 493 B1

nuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

b) Verbindungen mit mindestens zwei gegenüber Isocyanaten reaktionsfähigen Wasserstoffatomen von einem Molekulargewicht in der Regel von 400 bis 10.000. Hierunter versteht man neben Aminogruppen, Thiolgruppen oder Carboxylgruppen aufweisenden Verbindungen vorzugsweise Hydroxylgruppen aufweisende Verbindungen, insbesondere 2 bis 8 Hydroxylgruppen aufweisende Verbindungen, speziell solche vom Molekulargewicht 1.000 bis 6.000, vorzugsweise 2.000 bis 6.000, z.B. mindestens 2, in der Regel 2 bis 8, vorzugsweise aber 2 bis 6, Hydroxylgruppen aufweisende Polyether, Polyester, Polycarbonate und Polyesteramide, wie sie für die Herstellung von homogenen und von zellförmigen Polyurethanen an sich bekannt sind und wie sie z.B. in der DE-OS 28 32 253, Seiten 11 bis 18, beschrieben werden. Vorzugsweise weisen sie eine OH-Zahl von 28 bis 56 auf. Gemische dieser Verbindungen können ebenfalls eingesetzt werden.

c) Gegebenenfalls Verbindungen mit mindestens zwei gegenüber Isocyanaten reaktionsfähigen Wasserstoffatomen und einem Molekulargewicht von 32 bis 399. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 28 32 253, Seiten 10 bis 20, beschrieben.

d) und e)
Eine wäßrige Lösung von Alkalicarboxylaten, bevorzugt -acetaten, vorzugsweise von Kaliumacetat, mit einem Alkalicarboxylatgehalt von 10 bis 50 Gew.-%. Dabei wirken das Wasser als Treibmittel und die Alkalicarboxylate als Trimerisierungskatalysator. Als Carboxylate kommen in der Regel solche mit 1-6 C-Atomen, vorzugsweise 2-4 C-Atomen, in Frage.

f) Gegebenenfalls Hilfs- und Zusatzmittel wie
a) leicht flüchtige organische Substanzen als weitere Treibmittel,
b) Reaktionsbeschleuniger und Reaktionsverzögerer der an sich bekannten Art in der an sich üblichen Mengen,
c) oberflächenaktive Zusatzstoffe, wie Emulgatoren und Schaumstabilisatoren,
ferner Zellregler der an sich bekannten Art wie Paraffine oder Fettalkohole oder Dimethylpolysiloxane sowie Pigmente oder Farbstoffe und Flammschutzmittel der an sich bekannten Art, z. B. Diphenylkresylphosphat, Trikresylphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Diese gegebenenfalls mitzuverwendenden Hilfs- und Zusatzstoffe werden beispielsweise in der DE-OS 2 732 292, Seiten 21 - 24, beschrieben.

Weitere Beispiele von gegebenenfalls erfindungsgemäßen mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z B. auf den Seiten 103-113 beschrieben.

Durchführung des erfindungsgemäßen Verfahrens:

Die Reaktionskomponenten werden erfindungsgemäß nach dem an sich bekannten Einstufenverfahren, dem Präpolymerverfahren oder dem Semipräpolymerverfahren zu Umsetzung gebracht, wobei man sich oft maschineller Einrichtungen bedient, z. B. solcher, die in der US-PS 2 764 565 beschrieben werden. Einzelheiten über Verarbeitungseinrichtungen, die auch erfindungsgemäß infrage kommen, werden im Kunststoff-Handbuch, Band VII, herausgegeben von Vieweg und Höchtlen, Carl-Hanser-Verlag, München 1966, z. B. auf den Seiten 121-205, beschrieben.

Die Umsetzung aller Komponenten erfolgt erfindungsgemäß bei einer Kennzahl über 150, vorzugsweise bei einer Kennzahl von 170 bis 300.

Die Kennzahl, ein bei der Herstellung von Polyurethanschaumstoffen sehr häufig verwendeter Begriff, sagt etwas über den Vernetzungsgrad eines Schaumstoffs aus. Es ist Gepflogenheit, denjenigen Schaumstoff als mit der Kennzahl 100 gefertigt zu betrachten, bei welchem die den stöchiometrischen Verhältnissen entsprechende, bzw. die theoretisch notwendige Menge an Isocyanat benutzt wurde. Mit Hilfe der Kennzahl ist es also möglich, den Grad der Unter-oder Übervernetzung näher zu definieren. Die Kennzahl errechnet sich nach der allgemeinen Formel wie folgt:

$$\text{Kennzahl} = \frac{\text{Isocyanatmenge (praktisch)}}{\text{Isocyanatmenge (theoretisch)}} \times 100$$

Erfindungsgemäß bevorzugt ist das Einstufenverfahren.

Die Urethan- und überwiegend Isocyanatgruppen aufweisenden Hartschaumstoffe können vorzugsweise auch nach dem an sich bekannten Doppel-Transportbandverfahren hergestellt werden.

Die erfindungsgemäß erhältlichen Urethan- und überwiegend Isocyanuratgruppen aufweisenden Hartschaumstoffe finden z.B. Anwendung als Dämmaterialien, insbesondere in der Bauindustrie.

Beispiele

Beispiel 1 (Vergleich)

Es wurde eine Mischung folgender Komponenten hergestellt:

100 Gew.-Teile einer Polyolgemisches der OH-Zahl 205 mit einer Viskosität bei 25°C von 630 mPa.s, bestehend aus:

1. 20 Gew.-Teilen eines Polyethers der OH-Zahl 875 (Molekulargewicht 192), hergestellt durch Propoxylierung von Trimethylpropan

2. 30 Gew.-Teilen eines Polyethers der OH-Zahl 56(Molekulargewicht 2000), hergestellt durch Propoxylierung von Propylenglykol

3. 30 Gew.-Teilen eines Polyethers der OH-Zahl 45 (Molekulargewicht 3750), hergestellt durch Propoxylierung von Trimethylolpropan, Umsetzung des Reaktionsproduktes mit einem Blockpolyol aus Ethylenoxid/ Propylenoxid (EO : PO = 1 : 3,8) und anschließende Propoxylierung

4. 20 Gew.-Teilen Diphenylkresylphosphat als Flammschutzmittel

5. 2 Gew.-Teilen eines handelsüblichen Polyetherpolysiloxan-Schaumstabilisators (OS 50, Bayer AG, Leverkusen).

Mit dieser Mischung, im folgenden kurz Polyolkomponente genannt, wurde ein Urethan- und überwiegend Isocyanuratgruppen aufweisender Hartschaumstoff hergestellt, wobei als Katalysator eine Lösung von Kaliumacetat in Diethylenglykol verwendet wurde:

```
Polyolkomponente                        102 Gew.-Tle.

Dimethylcyclohexylamin                  0,5 Gew.-Tle.

25 %ige Lösung von Kaliumacetat in      5,6 Gew.-Tle.
        Diethylenglykol

Wasser                                  4,0 Gew.-Tle.

Polyisocyanat (Roh-MDI, Desmodur® 44V20, 232 Gew.-Tle.
        Bayer AG, Leverkusen)

Kennzahl                                197
```

Der Schaumstoff zeigte bereits in der Laborform Schrumpf und war für technische Zwecke nicht geeignet.

Beispiel 2 (erfindungsgemäß)

Zu Vergleichszwecken wurde ein Schaumstoff mit einer wäßrigen Kaliumacetat-Lösung hergestellt:

| | |
|---|---|
| Polyolkomponente | 102 Gew.-Tle. |
| Dimethylcyclohexylamin | 0,5 Gew.-Tle. |
| 26 %ige wäßrige Kaliumacetat-Lösung | 5,4 Gew.-Tle. |
| Polyisocyanat (Roh-MDI, Desmodur® 44V20, Bayer AG, Leverkusen) | 211 Gew.-Tle. |
| Kennzahl | 197 |

Der Schaumstoff zeigte keinen Schrumpf und war für technische Zwecke geeignet.
Die Ergebnisse der Verschäumungen sind in der nachfolgenden Tabelle wiedergegeben.

| | Beispiel 1 | Beispiel 2 |
|---|---|---|
| Reaktivität | | |
| a) Startzeit, s | 19 | 19 |
| b) Abbindezeit, s | 46 | 47 |
| freie Rohdichte, kg/m³ | 40,4 | 38,8 |
| Dimensionsstabilität | | |
| über 5h bei 130° C Länge, % | +1,15 | -0,11 |
| Breite, % | -1,26 | +0,78 |
| Höhe, % | -2,02 | -0,14 |
| Beurteilungen* | | |
| Aushärtung | 3 | 1 |
| Schaumstruktur | 2 | 1 |
| Bodenstörungen | mittlere | keine |

* = Beurteilungsnoten: 1 = sehr gut

2 = gut

3 = befriedigend

4 = ausreichend

5 = mangelhaft

**Patentansprüche**

1.  Verfahren zur Herstellung von Urethan- und überwiegend Isocyanuratgruppen aufweisenden Hartschaumstoffen durch Umsetzung von
    a) Polyisocyanaten mit

b) Verbindungen mit mindestens zwei gegenüber Isocyanaten aktiven Wasserstoffatomen vom Molekulargewicht 400 bis 10,000 und gegebenenfalls

c) Kettenverlangerungs- und Vernetzungsmitteln mit mindestens zwei gegenüber Isocyanaten aktiven Wasserstoffatomen vom Molekulargewicht 32 bis 399 in Gegenwart von

d) Wasser als Treibmittel und

e) Trimerisierungs-Katalysatoren, gegebenenfalls in Gegenwart von

f) anderen Treibmitteln und weiteren an sich bekannten Hilfs- und Zusatzmitteln,

bei einer Kennzahl von über 150, vorzugsweise 170 bis 300, dadurch gekennzeichnet, daß als Treib mittel und Trimerisierungskatalysator eine wäßrige Losung von Alkalicarboxylaten, vorzugsweise Kaliumacetat, mit einem Alkalicarboxylatgehalt von 10 bis 50 Gew.-% verwendet wird, wobei mindestens 1,0 Gew.-% Wasser, bezogen auf das Polyisocyanat, eingesetzt werden.

2. Verfahren gemäß Anspruch 1, dadurch gekennzeichnet, daß der Alkalicarboxylatgehalt der wäßrigen Losung 20 bis 40 Gew.-% betragt.

3. Verfahren gemäß Anspruch 1 und 2, dadurch gekennzeichnet, daß mindestens 1,4 Gew.-% Wasser, bezogen auf das Polyisocyanat, verwendet werden.

4. Verfahren gemäß Anspruch 1 bis 3, dadurch gekennzeichnet, daß die Schaumstoffe unter Mitverwendung halogenfreier Flammschutzmittel hergestellt werden.

5. Verwendung der gemäß Ansprüchen 1 bis 4 erhaltlichen Urethan- und überwiegend Isocyanuratgruppen aufweisenden Hartschaumstoffe als Dämmaterialien.

## Claims

1. A process for the production of rigid foams containing urethane and predominantly isocyanurate groups by reaction of

a) polyisocyanates

with

b) compounds containing at least two isocyanate-reactive hydrogen atoms and having a molecular weight of 400 to 10,000

and, optionally,

c) chain-extending and crosslinking agents containing at least two isocyanate-reactive hydrogen atoms and having a molecular weight in the range from 32 to 399

in the presence of

d) water as blowing agent

and

e) trimerization catalysts

and optionally in the presence of

f) other blowing agents and other auxiliaries and additives known per se,

the reaction being carried out at an index above 150 and preferably in the range from 170 to 300, characterized in that an aqueous solution of alkali metal carboxylates, preferably potassium acetate, having an alkali metal carboxylate content of 10 to 50% by weight for at least 1.0% by weight water, based on the polyisocyanate, is used as blowing agent and trimerization catalyst.

2. A process as claimed in claim 1, characterized in that the alkali metal carboxylate content of the aqueous solution is 20 to 40% by weight.

3. A process as claimed in claims 1 and 2, characterized in that at least 1.4% by weight water, based on the polyisocyanate, is used.

4. A process as claimed in claims 1 to 3, characterized in that the foams are produced using halogen-free flame-proofing agents.

5. The use of the rigid foams containing urethane and predominantly isocyanurate groups obtainable by the process claimed in claims 1 to 4 as insulating materials.

**Revendications**

1. Procédé pour la préparation de mousses dures présentant des groupes uréthanne et principalement des groupes isocyanurate, par la mise en réaction :

   a) de polyisocyanates avec

   b) des composés contenant au moins deux atomes d'hydrogène actifs vis-à-vis d'isocyanates, ayant un poids moléculaire de 400 à 10.000, et éventuellement

   c) des agents d'allongement de chaînes et de réticulation contenant au moins deux atomes d'hydrogène actifs vis-à-vis d'isocyanates, ayant un poids moléculaire de 32 à 399, en présence

   d) d'eau comme agent moussant et

   e) de catalyseurs de trimérisation, éventuellement en présence

   f) d'autres agents moussants et d'autres agents auxiliaires et additifs connus en soi,

   avec une valeur caractéristique supérieure à 150, de préférence de 170 à 300, caractérisé en ce qu'on utilise, comme agent moussant et comme catalyseur de trimérisation, une solution aqueuse de carboxylates de métaux alcalins, de préférence d'acétate de potassium, avec une teneur en carboxylate de métal alcalin de 10 à 50 % en poids, au moins 1,0 % en poids d'eau rapporté au polyisocyanate étant mis en oeuvre.

2. Procédé selon la revendication 1, caractérisé en ce que la teneur en carboxylate de métal alcalin de la solution aqueuse s'élève de 20 à 40 % en poids.

3. Procédé selon les revendications 1 et 2, caractérisé en ce qu'on utilise au moins 1,4 % en poids d'eau rapporté au polyisocyanate.

4. Procédé selon les revendications 1 à 3, caractérisé en ce qu'on prépare les mousses avec utilisation conjointe d'agents pare-flammes exempts d'halogène.

5. Utilisation des mousses dures présentant des groupes uréthanne et principalement des groupes isocyanurate, que l'on obtient conformément aux revendications 1 à 4, à titre de matériaux isolants.